(19) Europäisches Patentamt
European Patent Office
Office européen des brevets

(11) **EP 1 970 723 A1**

(12) **EUROPEAN PATENT APPLICATION**

(43) Date of publication:
**17.09.2008 Bulletin 2008/38**

(51) Int Cl.:
***G01S 1/00*** (2006.01)

(21) Application number: **07104289.9**

(22) Date of filing: **16.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **GMV Aerospace and Defence S.A.
Tres Cantos, 28760 Madrid (ES)**

(72) Inventors:
- **Cosmen Schortmann, Joaquin
  28760 Madrid (ES)**

- **Martínez Olagüe, Miguel Angel
  28760 Madrid (ES)**
- **Azaola Sáenz, Miguel
  28760 Madrid (ES)**
- **López Almansa, Jose Maria
  28760 Madrid (ES)**

(74) Representative: **Carpintero Lopez, Francisco et al
Herrero & Asociados, S.L.
C/ Alcala, 35
28014 Madrid (ES)**

(54) **Method for the computation of improved SBAS protection levels valid in non-controlled environments**

(57) The invention refers to a method for computing improved SBAS Protection Levels valid in non-controlled environments based on the information provided by a SBAS signal, comprising:
- detecting measurements affected by Non Line of Sight multipath (30) and excluding them for the computation of said Protection Levels (60) and PVT solution (70),
- and where the value of the estimated variance of errors associated to *Pure Multipath* is defined (40) as a function of the receiver velocity.

FIG. 1

## Description

Field of the invention

The present invention lies in the field of Global Navigation Satellite Systems (GNSS) receivers and/or GNSS-based applications.

The present invention can be applied in a wide diversity of fields, whenever PVT (position, velocity and time) information is used either in safety critical applications or between two parties with liability (either legal, administrative or economical) implications.

The present invention generalizes the computation and use of SBAS Protection Levels as defined in Civil Aviation, where it is assumed that the receiver is in a "clean" environment, i.e. not subject to large multipath and interferences, to its use in any non-controlled environment as it is the case of urban and road applications.

Background of the invention

The Civil Aviation introduced the use of GNSS for safety critical applications by complementing the computation of Position, Velocity and Time with the provision of position integrity. This position integrity is implemented by the computation of the so called Protection Levels, i.e. an ellipsoid around the computed position in which the real position is guaranteed to be with a very high probability (as high as $1\text{-}10^{-7}$). This computation assumes that the receiver is in a "clean" environment i.e. in absence of interferences and large multipath produced by external elements as it is the case of aircraft flying or landing in controlled airports.

Thus, the use of these Protection Levels in other environments (called "non-controlled") does not guarantee the required integrity as other errors, not considered by the civil aviation, may substantially affect the computed position.

Summary of the invention

The invention refers to a method for computing improved SBAS Protection Levels for its validity in non-controlled environments according to claim 1. Preferred embodiments of the method are defined in the dependent claims.

The present invention aims at ensuring the integrity of the navigation solution PVT (position, velocity and time) provided by GNSS systems, even in non-controlled environments, such as urban areas or roads, thereby increasing the field of application of integrity-related applications by computing "improved SBAS Protection Levels".

A first aspect the invention refers to a method for computing improved SBAS Protection Levels valid in non-controlled environments based on the information provided by a SBAS signal, comprising:

-   detecting measurements affected by Non Line of Sight multipath and excluding them for the computation of said Protection Levels and PVT solution,
-   and calculating the value of the estimated variance of errors associated to *Pure Multipath* as a function of the receiver velocity.

That is, according to the present invention, the estimated variance of errors associated to Pure Multipath as a function of the receiver velocity is included in the Protection Level as defined in Civil Aviation.

The PVT solution and Protection Levels are computed as defined by Civil Aviation, wherein the $\sigma_i$ required for the Protection Level estimation is computed following the definition in Appendix J of MOPS RTCA/DO-229C, that is:

$$\sigma_i^2 = \sigma_{i,flt}^2 + \sigma_{i,UIRE}^2 + \sigma_{i,air}^2 + \sigma_{i,tropo}^2$$

where:

$$\sigma_{air}[i] = \left(\sigma_{noise}^2[i] + \sigma_{multipath}^2[i] + \sigma_{divg}^2[i]\right)^{1/2}$$

and according to the present invention $\sigma_{multipath}^2$ [i] is substituted by specific values to account for multipath errors in a non-controlled environments as a function of the receiver velocity.

Preferably the detection of measurements affected by Non Line of Sight multipath is based on a CP-RAIM (Carrier Phase Receiver Autonomous Integrity Monitoring) algorithm.

The detection of measurements affected by Non Line of Sight multipath may be further complemented with an analysis of receiver clock jumps to account for scenarios where all measurements are simultaneously affected by said Non Line of Sight Multipath.

Alternatively, the detection of measurements affected by Non Line of Sight multipath is done by a simultaneous processing of signals received by two or more antennas.

The receiver velocity used for the Pure Multipath variance estimation can be previously computed based on the use of carrier-phase RAIM information.

Protection Levels are based on the integrity information that may be provided either by differential systems (as GBAS) or Galileo integrity service instead of by SBAS systems.

Protection Levels can be computed considering the maximum possible Protection Level increase between two consecutive epochs, considering the maximum feasible acceleration between these two epochs; that is, in case the Protection Level computed in one epoch is either larger than the one derived from the previous epoch and the maximum feasible acceleration, or not available, then the second one is used.

According to a preferred embodiment of the method of the invention, two PVT solutions are computed; indeed:

- besides from the first PVT solution, $PVT_i$, which is a result of processing only non-rejected measurements and the valid reference for the integrity related computations (i.e. Protection Levels are referred to that position),
- a second additional PVT solution, $PVT_a$, is computed, which includes all available measurements in order to maximize availability and accuracy.

In this case, said second solution $PVT_a$ can be the only output value and Protection Level will be increased by the distance between the positions of the first and second solutions, $PVT_i$ and $PVT_a$ in such a way that these increased Protection Level are referred to the $PVT_a$.

According to a preferred embodiment, the invention further comprises detecting interferences, and if an interference is detected, it further comprises marking or flagging the corresponding PVT solution as with no integrity.

This way, the invention proposes a method that either detects and eliminates or characterizes those additional errors and permits, the extrapolation of Civil Aviation Protection Levels -with the above-defined modifications- to its use in "non-controlled" environments.

Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

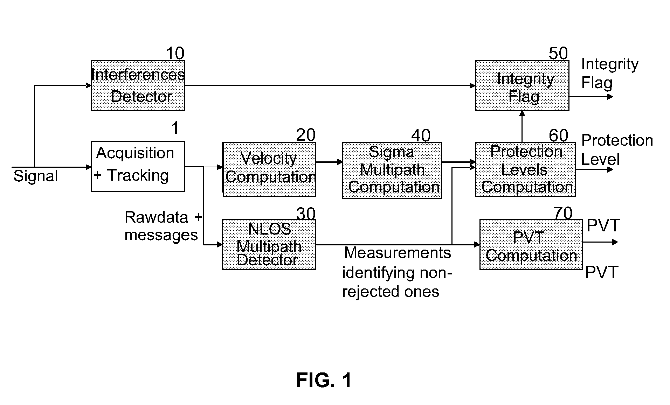

Figure 1 shows a block diagram for the computation of improved protection levels according to the present invention.

Detailed description of the preferred embodiments

Reference will now be made in detail to a preferred embodiment of the method of the present invention, for computing improved SBAS Protection Levels in non-controlled environments as shown in figure 1, which method is based on the service integrity included in a GNSS Signal in Space from SBAS system today. The method can be generalized for other GNSS signals with guaranteed integrity as provided by GBAS, Galileo or GPS-III.

The method is based on either the detection or the characterization of errors that are not considered in the Civil Aviation environment, namely:

- *Pure Multipath* where the main signal is received together with reflected signals from external obstacles such as buildings.
- *Non Line of Sight Multipath* i.e. where the direct signal is not received.
- Interferences.

As shown in figure 1, a preferred embodiment of the method for computing improved SBAS Protection Levels valid in non-controlled environments based on the information provided by a SBAS signal includes:

- A tracking and acquisition process [block 1] as in any other GNSS receiver where the incoming SBAS signal is processed and raw measurements (pseudorange and carrier phase for each satellite) are generated.
- Based on that same signal Interferences are also detected [block 10], in such a way that if an interference is detected the solution will be flagged as "with no integrity" by means of an interference monitoring system [block 50] as detailed below.

- Velocity based on the computed measurements is computed [block 20] based on specific algorithms that ensure their integrity such as CP-RAIM.
- Characterizing in a conservative way the *Pure Multipath* [block 40] in non-controlled environments, by estimating a variance value that is used in the computation of the Protection Levels [block 60] that is defined as a function of the previously mentioned velocity.
- *Non Line of Sight Multipath* are detected in parallel and the affected measurements are eliminated [block 30]. The output of this *Non Line* of *Sight Multipath* detector is an input for both the computation of PVT solution [block 70] and the computation of the associated *Protection Level* [block 60].

In fact, the invention proposes a method for computing improved SBAS Protection Levels based on non-rejected measurements and including in the Civil Aviation defined Protection Level the estimated variance of the errors associated to the Pure Multipath. Specifically:

- *Pure multipath* is highly dependent on the velocity of the receiver relative to the place where signal is reflected. Thus, the present invention proposes -unlike the standards- that the variance of the multipath errors be defined as a function of velocity having large values for low speeds, and but small values where speed is greater than a certain threshold (e.g. 3 m/s). The parameters that define this variance are based on conservative assumptions and experimental values that guarantee their integrity. For instance for velocities larger than the mentioned velocity threshold a variance of 2.5 metres is used.
- Detection of Non *Line* of *Sight Multipath* is based on the use of redundant information either by processing data from different epochs or from two antennas and can be implemented by two alternative methods:

  - A combination of a Carrier Phase RAIM and a detection of receiver clock jumps derived from the processing of multiple signals with large multipath errors.
  - Use of multiple antennas (two or more) that identifies when a signal is either direct or reflected by comparison of the measurements obtained from both antennas.

The two methods detect Non-Line of Sight Multipath and have potential capabilities to identify the measurements affected by Non-Line of Sight Multipath. If this identification is successful, measurements identified by this method as affected by Non Line of Sight multipath are rejected for its later use in the PVT solution and in the computation of Protection Levels.

The first method mentioned above, Carrier Phase RAIM (or CP-RAIM, for short) is already known and consists of an estimation of the change of the state vector (position and clock) between two consecutive measurement epochs. This estimation uses differences of carrier phase measurements (for each satellite, the difference of phase measurements corresponding to the two consecutive epochs in question). Using these differences as observables and essentially the same observation matrix as in a standard least squares position-clock estimation yields an estimate of the change of the state. The essential idea here is that, where absolute pseudo-range measurements yield an absolute estimation of the state vector, relative measurements (time differences of measurements) yield an estimation of a relative state vector (time difference of the state vector). This would work with pseudo-range measurements, but, since time differences of pseudo-range measurements are basically equivalent to carrier-phase ones, it is preferable to use carrier phase observations as their noise level is much smaller.

As a result of the estimation process we get:

- ■ A low-noise estimate of the change of the state vector between consecutive epochs.
- ■ Optionally, the covariance matrix of the estimation can be used for computing Protection Levels for the change of state.
- ■ A set of estimation residuals.

The estimation residuals serve as the input of a FDI (Failure Detection and Isolation) algorithm, which is a standard in RAIM algorithms. The FDI process provides a method for detecting and isolating the faulty measurement, as desired.

For scenarios where all measurements are affected by NLOS Multipath and the satellites geometry limits the CP-RAIM capability to observe them (e.g. when vehicle moves in parallel to the obstacle producing multipath, and all satellites are in the same half of the firmament), a complementary algorithm is implemented that detects jumps in the receiver clock caused by the effect of multiple measurements affected by the NLOS Multipath.

- *Interferences* are detected by means of an interference monitoring system, which can be based on any of the following techniques (or a combination of them):

- Estimation of total interference power in the time domain, based on the I/Q samples (I^2+Q^2).
- Estimation of PSD of the interference in the time domain, by computing the power in discrete spectrum intervals, based on the I/Q samples. Since this is performed in the time domain, the approach may require spectrum shifts (by multiplication with proper subcarriers, as well as bandpass filtering), in order to sweep for the different spectrum intervals.
- Estimation of interference power and/or PSD in the frequency domain, via FFT (periodgram or similar).

The estimated interference power or PSD will be used to decide whether the measurement must be accepted or rejected. In the case of using the interference PSD, the criterion of rejection can take into account the different susceptibility of the receiver to interferences placed at different spectral locations.

In case that interference is measured the overall PVT solution is declared as with no integrity, i.e. the Protection Level cannot be computed. Thus, the Integrity Flag is computed [block 50] based on the information from the interference detector as well as other criteria as defined by Civil Aviation (e.g. integrity alarms included in the SBAS signal).

The corresponding PVT solution and Protection levels are computed as defined by Civil Aviation, wherein the $\sigma_i$ required for the Protection Level estimation is computed following the definition in Appendix J of MOPS RTCA/DO-229C, that is:

$$\sigma_i^2 = \sigma_{i,flt}^2 + \sigma_{i,UIRE}^2 + \sigma_{i,air}^2 + \sigma_{i,tropo}^2$$

And according to the present invention:

$$\sigma_{air}[i] = \left(\sigma_{noise}^2[i] + \sigma_{multipath}^2[i] + \sigma_{divg}^2[i]\right)^{1/2}$$

where $\sigma_{multipath}^2[i]$ is substituted by specific values to account for multipath errors in a non-controlled environments as a function of the receiver velocity.

As indicated before, the present invention relates to a method for computing improved SBAS Protection Levels valid in non-controlled environments based on the information provided by a SBAS signal. It is to be understood that the above disclosure is an exemplification of the principles of the invention and does not limit the invention to the illustrated embodiments.

**Claims**

1. A method for computing improved SBAS Protection Levels valid in non-controlled environments based on the information provided by a SBAS signal, comprising:

   - detecting measurements affected by Non Line of Sight multipath (30) and excluding them for the computation of said Protection Levels (60) and PVT solution (70),
   - and where the value of the estimated variance of errors associated to *Pure Multipath* is defined (40) as a function of the receiver velocity.

2. A method according to claim 1, wherein detecting measurements affected by Non Line of Sight multipath (30) is based on a CP-RAIM algorithm.

3. A method according to claim 2, wherein detecting measurements affected by Non Line of Sight multipath is further complemented with an analysis of receiver clock jumps to account for scenarios where all measurements are simultaneously affected by said Non Line of Sight Multipath.

4. Method according to claim 1, wherein detecting measurements affected by Non Line of Sight multipath (30) is done by a simultaneous processing of signals received by two or more antennas.

5. A method according to any preceding claim, wherein the receiver velocity used for the Pure Multipath variance estimation is previously computed (20) based on the use of carrier-phase RAIM information.

6. A method according to any preceding claim, wherein Protection Levels are based on the integrity information provided either by differential systems (as GBAS) or Galileo integrity service instead of by SBAS systems.

7. A method according to any preceding claim, wherein Protection Levels are computed considering the maximum possible Protection Level increase between two consecutive epochs considering the maximum feasible acceleration between these two epochs.

8. A method according to any preceding claim, wherein besides from the first PVT solution, $PVT_i$, which is a result of processing only non-rejected measurements, being the valid reference for the integrity related computations, an additional second PVT solution $PVT_a$ is computed, which includes all available measurements in order to maximize availability and accuracy.

9. A method according to claim 8, wherein said second solution $PVT_a$ is the only output value and Protection Level is increased by the distance between the positions of the first and second solutions, $PVT_i$ and $PVT_a$.

10. A method according to any previous claim, which further comprises detecting interferences (10), and if an interference is detected, it further comprises marking the corresponding PVT solution as with no integrity.

**FIG. 1**

**European Patent Office**

**EUROPEAN SEARCH REPORT**

Application Number

EP 07 10 4289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/047413 A1 (LOPEZ NESTOR Z [ES] ET AL) 2 March 2006 (2006-03-02) | 1-3,5-7 | INV. G01S1/00 |
| Y | par. [0008], [0021], [0022], [0043]-[0047], [0052], [0054], [0084], [0085], [0098], [0105]-[0108] par. [0111] ----- | 4,8,10 | |
| X | EP 1 729 145 A (GMV S A [ES]) 6 December 2006 (2006-12-06) par. [0008], [0013], [0014], [0024], [0034]-[0036], [0052]-[0055], [0061], [0112]-[0114] ----- | 1-3,5-7 | |
| Y | MORRISON A ET AL: "Receiver Autonomous Mitigation of GPS Non-Line-of-Sight Multipath Errors" 18 January 2006 (2006-01-18), PROCEEDINGS OF THE INSTITUTE OF NAVIGATION. ION. NATIONAL TECHNICAL MEETING, XX, XX, PAGE(S) 141-148 , XP007903840 p. 2, section "inadequacy of current hardware solutions" ----- | 4 | |
| Y | US 2005/192024 A1 (SHEYNBLAT LEONID [US]) 1 September 2005 (2005-09-01) par. [0034] ----- -/-- | 8 | TECHNICAL FIELDS SEARCHED (IPC) G01S |

~~The present search report has been drawn up for all claims~~

| Place of search | Date of completion of the search | Examiner |
|---|---|---|
| Munich | 1 February 2008 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

European Patent
Office

**EUROPEAN SEARCH REPORT**

Application Number

EP 07 10 4289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NDILI A ET AL:  "GPS receiver autonomous interference detection" POSITION LOCATION AND NAVIGATION SYMPOSIUM, IEEE 1998 PALM SPRINGS, CA, USA 20-23 APRIL 1998, NEW YORK, NY, USA,IEEE, US, 20 April 1998 (1998-04-20), pages 123-130, XP010276850 ISBN: 0-7803-4330-1 p. 123, abstract and introduction p. 125 p. 123, results p. 128, fig. 9 ----- | 10 | |
| A | T.W. BEECH, M.A. MARTÍNEZ-OLAGÜE AND J. COSMEN-SCHORTMANN:  "Integrity: A Key Enabler for Liability Critical Applications" PROCEEDINGS OF THE 18TH INTERNATIONAL TECHNICAL MEETING OF THE SATELLITE DIVISION OF THE INSTITUTE OF NAVIGATION ION GNSS 2005, [Online] September 2005 (2005-09), XP002446473 ION Retrieved from the Internet: URL:http://www.ion.org/search/view_abstract.cfm?jp=p&idno=6506E90718670E> [retrieved on 2007-08-10] * the whole document * ----- | 1-3,5-7 | |
| A | US 6 691 066 B1 (BRODIE KEITH JACOB [US]) 10 February 2004 (2004-02-10) * the whole document * ----- | 1,8,9 | TECHNICAL FIELDS SEARCHED (IPC) |
| A | US 6 362 782 B1 (GREENSPAN RICHARD L [US] ET AL) 26 March 2002 (2002-03-26) * the whole document * ----- | 4 | |
| | -/-- | | |

~~The present search report has been drawn up for all claims~~

| Place of search | Date of completion of the search | Examiner |
|---|---|---|
| Munich | 1 February 2008 | GONZALEZ MORENO, J |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

**European Patent Office**

## EUROPEAN SEARCH REPORT

Application Number

EP 07 10 4289

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOELKER D-J: "MULTIPLE ANTENNAS FOR ADVANCED GNSS MULTIPATH MITIGATION AND MULTIPATH DIRECTION FINDING" 16 September 1997 (1997-09-16), TECHNICAL MEETING ION-GPS, XX, XX, PAGE(S) 541-550 , XP000962820 * the whole document * | 4 | |
| A | US 6 175 725 B1 (AUBER JEAN-CLAUDE [FR]) 16 January 2001 (2001-01-16) * the whole document * | 4 | |
| | | | **TECHNICAL FIELDS SEARCHED (IPC)** |

~~The present search report has been drawn up for all claims~~

| Place of search | Date of completion of the search | Examiner |
|---|---|---|
| Munich | 1 February 2008 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 07 10 4289

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-9 (fees paid) and 10 (the subject-matter of dependent claim 10 c
ould be searched without effort justifying such a fee and therefor
e the search report is issued for the four groups of inventions an
d the European search opinion will refer to all of them)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

EP 1 970 723 A1

**European Patent Office**

**LACK OF UNITY OF INVENTION
SHEET B**

Application Number

EP 07 10 4289

The Search Division considers that the present European patent application does not comply with the requirements of unity of invention and relates to several inventions or groups of inventions, namely:

1. claims: 1,2,3,5,6,7

    A method for computing improved Protection Levels, in which Carrier Phase techniques are used to detect measurements suffering multipath.
    ---

2. claims: 1,4

    A method for computing improved Protection Levels, in which techniques based in using two or more antennae are used to detect measurements suffering multipath.
    ---

3. claims: 1,8,9

    A method for computing improved Protection Levels, comprising a second calculation of PVT solution in order to maximize availability and accuracy.
    ---

4. claims: 1,10

    A method for computing improved Protection Levels by means of detecting measurements affected by interference.
    ---

## ANNEX TO THE EUROPEAN SEARCH REPORT
## ON EUROPEAN PATENT APPLICATION NO.

EP 07 10 4289

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2008

| Patent document cited in search report | | Publication date | Patent family member(s) | | Publication date |
|---|---|---|---|---|---|
| US 2006047413 | A1 | 02-03-2006 | NONE | | |
| EP 1729145 | A | 06-12-2006 | NONE | | |
| US 2005192024 | A1 | 01-09-2005 | AU | 2003301350 A1 | 04-05-2004 |
| | | | BR | 0315350 A | 23-08-2005 |
| | | | CA | 2501268 A1 | 29-04-2004 |
| | | | EP | 1552323 A2 | 13-07-2005 |
| | | | JP | 2006504110 T | 02-02-2006 |
| | | | KR | 20050051695 A | 01-06-2005 |
| | | | MX | PA05003921 A | 17-06-2005 |
| | | | WO | 2004036240 A2 | 29-04-2004 |
| US 6691066 | B1 | 10-02-2004 | US | 2004199833 A1 | 07-10-2004 |
| US 6362782 | B1 | 26-03-2002 | AU | 3086001 A | 07-11-2001 |
| | | | WO | 0181941 A1 | 01-11-2001 |
| US 6175725 | B1 | 16-01-2001 | CA | 2249033 A1 | 02-04-1999 |
| | | | EP | 0913702 A1 | 06-05-1999 |
| | | | FR | 2769442 A1 | 09-04-1999 |
| | | | JP | 11183586 A | 09-07-1999 |

EPO FORM P0459

For more details about this annex : see Official Journal of the European Patent Office, No. 12/82